# EUROPÄISCHE PATENTANMELDUNG

(11) **EP 2 421 130 A1**
(43) Veröffentlichungstag der Anmeldung: **22.02.2012**
(21) Anmeldenummer: 10173530.6
(22) Anmeldetag: 20.08.2010
(51) Int. Cl.: H02M 1/32, G01K 3/04

(54) **Verfahren und Ermittlungseinheit zur Ermittlung eines aktuellen Beanspruchungsindikatorwerts eines elektrischen und/oder elektronischen Bauteils in einer Windkraftanlage**

(71) Anmelder: Siemens Aktiengesellschaft, 80333 München (DE)
(72) Erfinder: Krug, Florian, 81243, München (DE)

(57) **Zusammenfassung**

Verfahren und Ermittlungseinheit zur Ermittlung eines aktuellen Beanspruchungsindikatorwerts eines elektrischen und/oder elektronischen Bauteils in einer Windkraftanlage

Die Erfindung betrifft ein Verfahren zur Ermittlung eines aktuellen Beanspruchungsindikatorwerts (BI) eines elektrischen und/oder elektronischen Bauteils (1), insbesondere eines Umrichters, in einer Windkraftanlage (3). Dabei wird der Beanspruchungsindikatorwert (BI) auf Basis von Temperaturmessungen in einem Umgebungsbereich des elektrischen und/oder elektronischen Bauteils (1) ermittelt. Außerdem betrifft die Erfindung eine entsprechende Ermittlungseinheit (17).

## Beschreibung

Verfahren und Ermittlungseinheit zur Ermittlung eines aktuellen Beanspruchungsindikatorwerts eines elektrischen und/oder elektronischen Bauteils in einer Windkraftanlage

Die vorliegende Erfindung betrifft ein Verfahren zur Ermittlung eines aktuellen Beanspruchungsindikatorwerts eines elektrischen und/oder elektronischen Bauteils, insbesondere eines Umrichters, in einer Windkraftanlage. Außerdem betrifft sie eine Ermittlungseinheit zur Ermittlung eines solchen aktuellen Beanspruchungsindikatorwerts in demselben Kontext.

Elektrische und/oder elektronische Bauteile in Windkraftanlagen, beispielsweise Umrichter (auch Inverter genannt), sind aufgrund ihres besonderen Einsatzortes, der meist innerhalb des Maschinenhauses (auch Kanzel genannt) der Windkraftanlage angeordnet ist, äußerst rauen Umweltbedingungen ausgesetzt. Insbesondere unterliegen sie starken Vibrationen durch Wind und Betrieb der Rotoren, sowie hohen Temperaturschwankungen aufgrund irregulärer Schaltzyklen und aufgrund der schnell wechselnden Außentemperaturen, wobei diese Wechsel zudem hohe Amplituden aufweisen. Dies gilt sowohl für den Betrieb in Offshore-Windkraftanlagen als auch in Onshore-Windkraftanlagen, wobei beim Offshore-Betrieb zusätzlich noch Einflussfaktoren wie vermehrt auftretende Stürme und damit verbunden (salzhaltiges) Spritzwasser die Umweltbedingungen zusätzlich verschärfen. Dies bedeutet in Summe, dass derartige elektrische und/oder elektronische Bauteile einer starken Abnutzung unterliegen, selbst obwohl sie meist im Gehäuse des Maschinenhauses angeordnet sind.

Gleichzeitig bedeutet ein unerwarteter Ausfall eines einzelnen solchen elektrischen und/oder elektronischen Bauteils in einer Windkraftanlage sehr hohen Aufwand an zusätzlichem Wartungseinsatz und -kosten. Es ist daher meist das Ziel, solche Bauteile, beispielsweise im Rahmen von regelmäßigen Wartungen, in einer regulären Austauschaktion zu warten, damit ein Ausfall nicht plötzlich und unerwartet auftritt wodurch zusätzliche Stillstandzeiten vermieden werden können.

Entsprechend wichtig ist es, hoch verlässliche Möglichkeiten der richtigen Abschätzung eines Wartungszeitpunkts bereitzustellen, um früh genug reagieren zu können, das heißt bevor das elektrische und/oder elektronische Bauteil ausfällt. Derartige Vorwarnsysteme für elektrische und/oder elektronische Bauteile, etwa für Umrichter, existieren derzeit nicht; vielmehr besteht die Überwachung der Bauteile derzeit in einer reinen Fehlerüberwachung, d. h. es wird angezeigt, wenn ein Bauteil bereits ausgefallen ist. Um solchen Ausfällen zu begegnen werden zudem die Wartungsintervalle bewusst sehr kurz gehalten sind und lieber ein Bauteil sicherheitshalber zu früh ausgetauscht. Dies wiederum bringt mit sich, dass der Material- und Arbeitseinsatz bezüglich dieser elektrischen und/oder elektronischen Bauteile in der Regel höher ist als es eigentlich technisch notwendig wäre.

Aufgabe der Erfindung ist es daher, eine verbesserte Überwachung elektrischen und/oder elektronischen Bauteile in Windkraftanlagen zu ermöglichen, insbesondere bevorzugt ein Vorwarnsystem bereitzustellen, mit dessen Hilfe sowohl den äußerst anspruchsvollen Rahmenbedingungen von elektrischen und/oder elektronischen Bauteilen in Windkraftanlagen Rechnung getragen werden kann als auch rechtzeitig genug ein Wartungszustand angezeigt werden kann.

Diese Aufgabe wird durch ein Verfahren gemäß Anspruch 1 und eine Ermittlungseinheit gemäß Anspruch 13 gelöst.

Entsprechend wird in einem Verfahren der eingangs genannten Art erfindungsgemäß der Beanspruchungsindikatorwert auf Basis von Temperaturmessungen in einem Umgebungsbereich des elektrischen und/oder elektronischen Bauteils ermittelt. Dies erfolgt bevorzugt automatisch, das heißt mit Hilfe selbsttätiger Auswertungsalgorithmen bzw. -systeme im Rahmen eines Prozesses, für den im regulären Betrieb kein menschlicher Input zwingend nötig ist.

Während bei der Bestimmung von Beanspruchungsindikatorwerten in der Regel eine Benutzungszeit eines elektronischen Bauelements schlicht aufaddiert wird, wendet sich das erfindungsgemäße Verfahren von einer derartigen reinen zeitlichen Betrachtung ab und bringt eine Einflussgröße in den Fokus, deren Signifikanz bisher bei der Bestimmung außer Acht gelassen wurde. Die Temperaturkurve, der ein Bauelement ausgesetzt ist, beeinflusst nämlich seine Alterung speziell im Rahmen von Windkraftanlagen besonders stark: Einzelkomponenten solcher elektrischen bzw. elektronischen Bauteile, beispielsweise Chipelemente, sind nämlich über permanente Verbindungen, beispielsweise Klebe- oder Lötverbindungen miteinander in Kontakt. So werden beispielsweise mehrere Halbleiterelemente, etwa sogenannte IGBT-Bausteine (Insulated Gate Polar Thyristors) eines IGBT-Umrichters, auf einem Trägersubstrat wie einer Platine aufgeklebt, gecrimpt bzw. gelötet. Diese permanente Verbindung zwischen Platine und Bausteinen wird durch die ständigen Temperaturwechsel in der Windkraftanlage starken Scherbelastungen ausgesetzt. Bei Erhitzung dehnen sich nämlich die Einzelkomponenten anders, in der Regel stärker, aus als das Trägersubstrat, so dass Spannungen in der Verbindung zwischen den beiden entstehen.

Die Erfindung macht es sich nun zunutze, dass sich solche Spannungen im Bauteil aufaddieren und so zu Materialermüdungen der Verbindungen zwischen den Einzelkomponenten des Bauteils führen, mit dem Effekt, dass meist das Brechen einer solchen Verbindung zum Ausfall des Bauteils führt. Der Erfinder hat also die wesentliche Ursache der entscheidenden Ermüdungsphänomene elektrischer und/oder elektronischer Bauteile in Windkraftanlagen zielgenau erkannt und hat daraus folgerichtig seine Methode abgeleitet, einen entsprechend akkuraten bzw. repräsentativen Beanspruchungsindikatorwert des elektrischen bzw. elektronischen Bauteils zu ermitteln.

Die Akkumulation von Beanspruchungswerten ist an sich aus der Materialkunde, nämlich aus der Untersuchung von Materialermüdungserscheinungen bekannt. So werden beispielsweise Beanspruchungen durch Spannungen bzw. Lasten an mechanischen Komponenten von Maschinen ermittelt und akkumuliert. Allerdings besteht ein entscheidender Unterschied zwischen der Vorgehensweise bei der Untersuchung von Ermittlungen in Einzelmaterialien zur Aufgabenstellung wie sie hier vorliegt darin, das elektrische bzw. elektronische Bauteile aus zahlreichen Einzel-Bestandteilen zusammengestellt sind und es daher nicht selbstverständlich ist, dass der für die Ermüdung entscheidende Faktor gerade die Temperatur(kurve) ist, der das Bauteil ausgesetzt ist. Es hat sich daher überraschend gezeigt, dass die hier vorgestellte erfindungsgemäße Methode deutlich besser dazu geeignet ist, die Beanspruchung eines elektronischen Bauelements in einer Windkraftanlage abzubilden als etwa die reine Berechnung auf Basis von Betriebszeiten. Diese wäre nämlich an sich anzunehmen, kann man doch davon ausgehen, dass nicht die Verbindungen das schwächste Glied im Bauteil sind sondern die einzelnen Funktionskomponenten, d. h. also die elektronischen Bausteine. Kann davon wahrscheinlich im Rahmen üblicher Elektronik-Anwendungen auch ausgegangen werden, so hat sich in Bezug auf Windkraftanlagen-Anwendungen aber herausgestellt, dass die extremen Temperaturschwankungen die Bauteile so deutlich schwächen, dass andere Alterungsfaktoren eine untergeordnete Rolle spielen.

Dieser Effekt ist im Windkraftanlagen-Bereich nicht nur bei den erwähnten IGBT-Modulen, sondern beispielsweise auch bei mehrlagigen Kondensatorenblöcken, bei Transformatoren oder bei Generatoren zu erkennen. Auch die Alterung von galvanischen Systemen wie Batterien kann auf Basis dieses Effekts abgebildet werden.

Durch die sehr akkurate Berechnung von Beanspruchungsindikatorwerten werden elektrische bzw. elektronische Bauteile seltener gewartet, nämlich nur in Abhängigkeit von den realistisch ermittelten Beanspruchungsindikatorwerten, und es kommt zu weniger unerwarteten Ausfällen der elektrischen bzw. elektronischen Bauteile. Gleichzeitig ist diese Methode auch ohne größeren Zusatzaufwand zu bewerkstelligen, da Temperaturmessungen im Windkraftanlagen, insbesondere im Bereich der Leistungselektronik von Windkraftanlagen, ohnehin vorgenommen werden, so dass davon auszugehen ist, dass ausreichend viele Temperatursensoren an geeigneten Messorten bereitstehen, um die benötigten Messwerte liefern zu können. Es bedarf also lediglich einer entsprechend angepassten Auswerteelektronik, die aus den Temperaturmesswerten den Beanspruchungsindikatorwert ableitet und gegebenenfalls entsprechende Signale weitergibt.

Eine erfindungsgemäße Ermittlungseinheit der eingangs genannten Art weist eine Eingangsschnittstelle zur Entgegennahme von Temperaturmesswerten und ein Auswertungsmodul auf, das so ausgebildet ist, dass es im Betrieb einen aktuellen Beanspruchungsindikatorwert des Bauteils auf Basis der Temperaturmesswerte ermittelt. Hierzu kann das Auswertungsmodul mit einer eigens darin hinterlegten Logik, das heißt den Regeln eines Ableitungsalgorithmus, ausgestattet sein oder auf eine entsprechende Logik, etwa in Form einer Auswertungsdatenbank, zurückgreifen, d. h. Zugriff darauf haben. Eine solche Logik kann sowohl innerhalb der Ermittlungseinheit, also beispielsweise innerhalb des Auswertungsmoduls, als auch außerhalb angeordnet, beispielsweise auch über Datennetzwerke komplett außerhalb der Windkraftanlage mit der Ermittlungseinheit verbunden, sein.

Die Erfindung umfasst weiterhin eine Bauteilanordnung eines elektrischen und/oder elektronischen Bauteils, insbesondere eines Umrichters, in einer Windkraftanlage, umfassend das Bauteil und einen Temperatursensor zur Durchführung von Temperaturmessungen im Bereich des elektronischen Bauteils sowie eine erfindungsgemäße Ermittlungseinheit.

Da die Auswertung der Temperaturmesswerte innerhalb der Ermittlungseinheit sowohl durch Hardware als auch mit Hilfe von Softwarekomponenten bzw. durch eine Kombination aus Hardware und Software durchgeführt werden kann, umfasst die Erfindung auch ein Computerprogrammprodukt, das direkt in einen Prozessor eines programmierbaren Ermittlungssystems ladbar ist, mit Programmcode-Mitteln, um alle Schritte eines erfindungsgemäßen Verfahrens auszuführen, wenn das Programmprodukt auf dem Ermittlungssystem ausgeführt wird.

Weitere besonders vorteilhafte Ausgestaltungen und Weiterbildungen der Erfindung ergeben sich auch aus den abhängigen Ansprüchen sowie der nachfolgenden Beschreibung. Dabei kann das erfindungsgemäße Verfahren auch entsprechend den abhängigen Ansprüchen zum Ermittlungssystem weitergebildet sein und umgekehrt.

Prinzipiell ist es möglich, den Beanspruchungsindikatorwert auch dann zu ermitteln, wenn das Bauteil bereits im Einsatz in der Windkraftanlage war. So kann beispielsweise nach einem bestimmten Einsatzzeitraum ein Zwischen-BeanspruchungsIndikatorwert festgelegt oder mit geeigneten Methoden (beispielsweise und vorzugsweise der erfindungsgemäßen) im Nachhinein ermittelt werden und dann mithilfe des erfindungsgemä-βen Verfahrens weiter fortgeschrieben werden. Es ist jedoch bevorzugt, dass die Temperaturmessungen über den gesamten Einsatzzyklus des Bauteils in der Windkraftanlage durchgeführt werden. Dadurch wird gewährleistet, dass der Beanspruchungsindikatorwert durchgängig mithilfe des erfindungsgemä-βen Verfahrens ermittelt wird, was insbesondere die Stringenz der Ermittlungsmethode und damit die Aussagekraft der Ergebnisse erhöht.

Dabei werden besonders bevorzugt aus den Temperaturmessungen Referenzwerte abgeleitet und akkumuliert und es wird der Beanspruchungsindikatorwert auf Basis der akkumulierten Referenzwerte gebildet. Ein solcher Indikatorwert repräsentiert die akkumulierten Referenzwerte, bevorzugt umfasste er sie. Bei den Referenzwerten kann es sich sowohl um aus den Temperaturmessungen abgeleitete Betragswerte handeln als auch um Zahlenangaben, beispielsweise wie viele Temperaturzyklen das Bauteil bereits durchlaufen hat. Die Referenzwerte repräsentieren damit Messgrößen, die den Verschleiß beziehungsweise die Materialermüdung des Bauteils beziehungsweise einzelner seiner Komponenten zahlenmäßig widerspiegeln. Dabei kann die Akkumulation z. B. eine einfache Addition der Referenzwerte umfassend, sie kann jedoch auch nicht-linear erfolgen. Die entsprechende Akkumulationsmethode kann insbesondere abhängig von der Art und dem Einsatzort des jeweiligen elektrischen bzw. elektronischen Bauteils in der Windkraftanlage gewählt werden.

Die Temperaturmessungen können sowohl kontinuierlich als auch in regelmäßigen Abständen durchgeführt werden. Je dichter diese Abstände sind bzw. je näher die Temperaturmessungen an ein rein kontinuierliches Verfahren angenähert werden, desto feiner kann auch die Auswertung der Messergebnisse ausfallen und dann in die Ermittlung des Beanspruchungsindikatorwerts eingehen. Auf der anderen Seite genügt es auch, ausreichend häufige Temperaturmessungen getaktet durchzuführen, da davon ausgegangen werden kann, dass dennoch größere Temperaturzyklen mit Hilfe einer solchen Methode, beispielsweise auf Basis von viertelstündlichen Messungen bzw. Übermittlungen von Messergebnissen, verhältnismäßig genau abbildbar sind. Der Vorteil einer solchen Taktung besteht insbesondere darin, dass eine geringere Messdatenmenge zu verarbeiten ist und so Übertragungs- und Verarbeitungsraten auf ein notwendiges Mindestmaß reduziert werden können.

Bevorzugt basieren die Referenzwerte auf Temperaturzyklen einer aus den Temperaturmessungen ermittelten Temperaturverlaufskurve. Die Auswertung dieser Temperaturverlaufskurve, das heißt insbesondere die Bestimmung und die Gewichtung der Temperaturzyklen, erfolgt dabei besonders bevorzugt mithilfe von Auswertungsalgorithmen wie sie aus dem Bereich der Materialwissenschaft, das heißt im Rahmen der Untersuchung von Materialermüdungserscheinungen, verwendet werden. Eine Möglichkeit besteht dabei darin, auf Basis der Wöhler-Kurve eine Auswertung und Gewichtung vorzunehmen, eine andere Methode basiert auf den Regeln von Palmgren und Miner, die von einer linearen Abnutzung im Bereich der Materialermüdung ausgehen.

Alternativ oder ergänzend basieren die Referenzwerte vorzugsweise auf Maxima und/oder Minima einer aus den Temperaturmessungen ermittelten Temperaturverlaufskurve. Solche Extremwerte geben indirekt Aufschluss darüber, welchen höchsten temperaturbezogenen Beanspruchungen das Bauteil ausgesetzt wurde, so dass durch Berücksichtigung der Maxima beziehungsweise Minima ein besonders akkurater Rückschluss auf den Verschleiß des Bauteils möglich wird.

Weiterhin ist es vorteilhaft, wenn die Referenzwerte auf Basis von Über- und/oder Unterschreitungen von vorab festgelegten Temperatur-Schwellenwerten festgelegt werden. Die Überbeziehungsweise Unterschreitungen können dabei einfach gezählt werden und als Zählwerte in die Akkumulation eingehen. Alternativ können die Temperaturbeträge oberhalb beziehungsweise unterhalb der gewählten Temperaturschwellenwerte zur Akkumulation herangezogen werden.

Die Schwellenwerte dienen dabei zum Beispiel erstens zur Abgrenzung von effektiv insignifikanten Temperaturschwankungen von solchen, die den Verschleiß des Bauteils maßgeblich mitbewirken. Zweitens kann mit ihrer Hilfe eine einfache Ermittlung der Referenzwerte erfolgen im Vergleich zu solchen Verfahren, bei denen grundsätzlich alle Temperaturverläufe bei einer Akkumulation herangezogen werden. Insbesondere wird dadurch Rechnerkapazität gespart.

Es ist weiterhin auch möglich, mehrere Schwellenwerte zu setzen, nämlich mindestens einen Schwellenwert, der eine Überschreitung einer kritischen Temperaturschwelle bedeutet, und mindestens einen Schwellenwert, der eine Unterschreitung einer kritischen Temperaturschwelle bedeutet, sowie gegebenenfalls weitere Schwellenwerte, die zur Bewertung der Signifikanz der jeweiligen Über- bzw. Unterschreitungen herangezogen werden können.

So kann beispielsweise ein erster Überschreitungsschwellenwert gesetzt sein, der einen einfachen Zählimpuls auslöst und ein zweiter Überschreitungsschwellenwert, der einen zusätzlichen einfachen Zählimpuls auslöst sowie ein dritter Überschreitungsschwellenwert, dessen Überschreitung beispielsweise sogar noch stärker gewichtet werden kann als ein einfacher Zählimpuls. Analog hierzu können auch Unterschreitungsschwellenwerte stufenweise gesetzt werden.

Als einfaches Verfahren im Rahmen einer solchen schwellenwertbasierten Ermittlung können die Beträge der Über- bzw. Unterschreitungen im Rahmen der Akkumulation einfach addiert werden. Der Beanspruchungsindikatorwert besteht in diesem Fall schlicht aus den addierten Beträgen der Über- bzw. Unterschreitungen der Schwellenwerte.

Um zu erkennen, welchen Beanspruchungsindikatorwert ein bestimmtes elektrisches bzw. elektronisches Bauteil im Verlaufe seines Einsatzes erreicht hat, werden bevorzugt grafische Darstellungsverfahren verwandt, mit deren Hilfe einem Benutzer, zum Beispiel einem Bediener eines Kontrollrechners in einem Kontrollzentrum, Beanspruchungsindikatorwerte ausgegeben werden. Der aktuelle Beanspruchungsindikatorwert wird also grafisch, bevorzugt mit Hilfe einer Skala und/oder einer anderweitigen grafischen Kodierung, an einen Benutzer ausgegeben. Dadurch ist eine direkte Information für den Benutzer gegeben, aufgrund derer zeitgenau Bewertungen des Zustandes des Bauteils vorgenommen und in der Folge Austauschmaßnahmen eingeleitet werden können. Statt einer grafischen Darstellung kann auch eine Ausgabe über akustische Ausgabemittel, beispielsweise eine Sprachausgabe, erfolgen. Die Ausgabe muss nicht zwangsläufig am Einsatzort des elektrischen bzw. elektronischen Bauteils erfolgen, sondern kann auch über entsprechende Datenübertragungssysteme an eine Zentrale weitergeleitet werden. Sie kann auch im Eingangsbereich des Turms der Windkraftanlage, das heißt (bei Onshore-Anlagen) von einer ebenerdigen Position bzw. (bei Offshore-Anlagen) einem Standort auf Höhe des Wasserspiegels an einem Aufstellungsort ablesbar beziehungsweise hörbar erfolgen.

Ein besonderer Vorteil ergibt sich dann, wenn der aktuelle Beanspruchungsindikatorwert mit einem Wartungsindikatorwert in relativen und/oder absoluten Bezug gesetzt wird. Dieser Wartungsindikatorwert repräsentiert einen Zustand des Bauteils, an dem das Bauteil aufgrund von vorab festgelegten Vorgaben gewartet werden soll. Solche vorab festgelegten Vorgaben umfassen beispielsweise Erfahrungswerte, Normen oder anderweitige ähnliche Vorschriften. Unter einer Wartung wird sowohl ein Austausch des kompletten Bauteils oder von Komponenten des Bauteils, jedoch auch eine Reparatur beziehungsweise eine eingehende Untersuchung des Bauteils verstanden. Durch die Darstellung des Beanspruchungsindikatorwerts in Bezug auf den Wartungsindikatorwert kann ein Benutzer schnell und intuitiv feststellen, wie viel Zeit beziehungsweise wie viele Temperaturzyklen das Bauteil mit hoher Wahrscheinlichkeit noch sicher funktionieren wird und wann er eine Wartung vornehmen muss. Mit anderen Worten ist damit ein relativ akkurater Rückschluss auf die relative Lebensdauer des Bauteils unkompliziert und intuitiv möglich.

Dies kann zusätzlich noch dadurch erleichtert werden, dass der Bezug zwischen dem aktuellen Beanspruchungsindikatorwert und dem Wartungsindikatorwert grafisch, bevorzugt mit Hilfe einer Skala und/oder einer grafischen Kodierung, an einen Benutzer ausgegeben wird. Die Vorteile der grafischen Ausgabe sind bereits erwähnt worden, sie werden noch potenziert durch die Bezugstellung der beiden Indikatorwerte zueinander.

Grundsätzlich kann die Temperaturmessung, auf der das erfindungsgemäße Verfahren basiert, an zahlreichen geeigneten Stellen innerhalb und sogar außerhalb der Windkraftanlage erfolgen. Insbesondere damit die Messgenauigkeit noch erhöht wird, ist es jedoch bevorzugt, die Temperaturmessungen durch mindestens einen Temperatursensor durchzuführen, der an einer relativ zum Bauteil festen Stelle im Umgebungsbereich des Bauteils angebracht ist. Ein solcher Umgebungsbereich definiert sich durch einen Abstand vom Bauteil, in dem zu erwarten ist, dass die dort ermittelte Temperatur in ° Celsius unter regulären Betriebsumständen der Windkraftanlage um maximal 10% bevorzugt um maximal 5%, besonders bevorzugt um maximal 2% abweicht von der Temperatur des Bauteils zur selben Messzeit.

Eine solche Anordnung des Temperatursensors bedingt, dass besonders verlässliche Messwerte abgeleitet werden können, die die Temperaturkurve des Bauteils mit großer Feinheit wiedergeben. Dies bedeutet trotzdem in der Regel keinen Zusatzaufwand, da in Windkraftanlagen ohnehin Temperatursensoren fest installiert sind, so dass diese einfach nur erfindungsgemäß genutzt und ggf. geeignet positioniert zu werden brauchen. Eine weitere Erhöhung der Messgenauigkeit und der Repräsentativität der ermittelten Temperaturmesswerte kann dadurch erzielt werden, dass ein einzelner Temperatursensor verwendet wird, der relativ zum Bauteil, bevorzugt verbunden mit dem Bauteil, an einem Zentralort angebracht ist. Ein solcher Zentralort kann beispielsweise auf der Mittelachse des Bauteils beziehungsweise einem Symmetriepunkt des Bauteils liegen; besonders bevorzugt ist der Temperatursensor direkt auf dem Bauteil, beispielsweise auf einer Trägerplatine des Bauteils, angeordnet und vorteilhafter Weise auch dort fixiert. Dies garantiert, dass die Temperaturmessung dort erfolgt, wo die Temperaturschwankungen praktisch direkt zu einem Verschleiß des Bauteils führen; die Fixierung an einer Trägerplatine beziehungsweise am Bauteil selbst garantiert zudem, dass der Temperatursensor nicht versehentlich beispielsweise bei Vibrationen vom Bauteil weg und später wieder in Richtung Bauteil hin befördert wird, wodurch sich Verfälschungen der Temperaturkurve ergäben.

Alternativ zur Anordnung eines Einzel-Temperatursensors können auch mehrere Temperatursensoren verwendet werden, die an repräsentativen Messorten im Umgebungsbereich des Bauteils angeordnet sind, bevorzugt an Messorten, an denen gemäß vorab erhobenen Erfahrungswerten besonders hohe lokale Temperaturschwankungen auftreten. Solche Erfahrungswerte können beispielsweise aus entsprechenden Wissenssystemen (Datenbanken) oder auf Basis von eigenen Messungen der Temperaturschwankungen abgeleitet werden. Die Anbringung der Temperatursensoren erfolgt damit im Effekt an besonders kritischen Orten im Bereich des Bauteils. Bei geeigneter Anbringung ist dadurch die Aussagekraft der Temperaturmesswerte wiederum besonders hoch.

Da erkannt wurde, dass gerade der thermisch erzeugte Stress besonders für die Alterung der elektrischen bzw. elektronischen Bauteile verantwortlich ist, wird es im Rahmen der Erfindung auch bevorzugt, eine Kühlung der Bauteile durchzuführen, insbesondere an den Verbindungen einzelner Bauteilkomponenten. Eine solche Kühlung kann sowohl aktiv, etwa mithilfe von Ventilatoren, als auch passiv, etwa durch Kühlelemente, durchgeführt werden. Insbesondere kann sie in Abhängigkeit von den in der Temperaturmessung ermittelten Messwerten geregelt werden, so dass beispielsweise besondere Temperaturspitzen abgefedert werden, um massivere Schäden an den Bauteilen gezielt zu verhindern.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine Seitenansicht einer Windkraftanlage mit einer Ausführungsform eines erfindungsgemäßen Ermittlungssystems,
Figur 2 eine schematische Detailansicht einer Bauteilanordnung mit demselben Bauteil und demselben Ermittlungssystem wie in Figur 3 mitsamt einem nochmals verfeinerten Detail eines einzelnen Bausteins des elektronischen Bauteils,
Figur 3 drei Kurvendarstellungen von Temperatur-, Beanspruchungs- und Lebenszeitverläufen des elektronischen Bauteils aus Figur 2,
Figur 4 eine schematische Blockdarstellung einer Systemarchitektur, wie sie in der Bauteilanordnung aus Figur 2 realisiert ist,
Figur 5 eine schematische Blockdarstellung eines Signalprozesses im Rahmen einer Ausführungsform des erfindungsgemäßen Verfahrens.

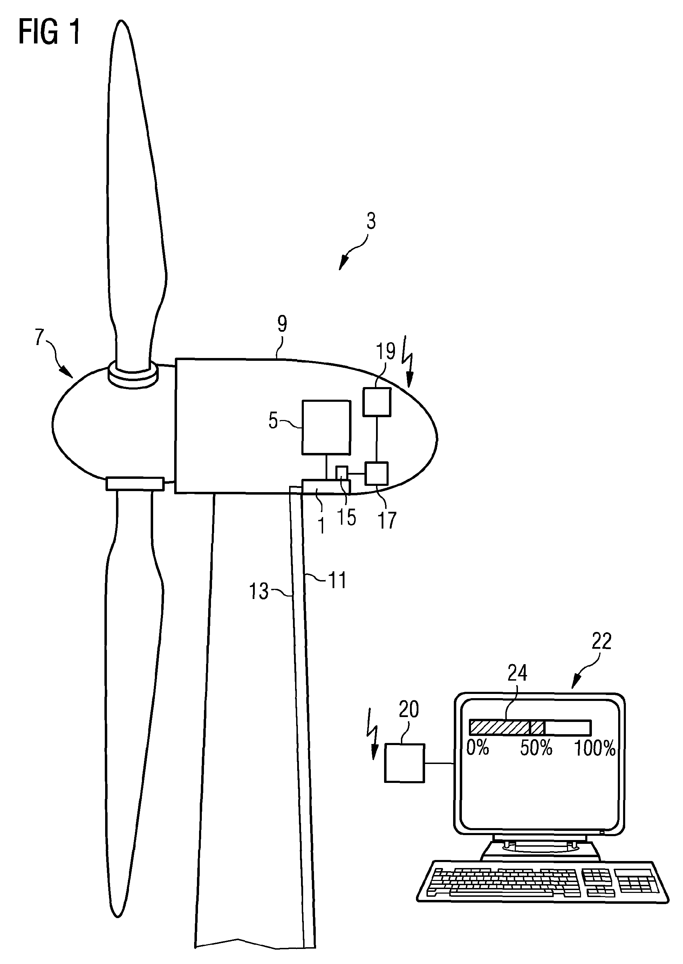

Figur 1 zeigt eine Windkraftanlage 3 mit einem Turm 11, auf dem eine Kabine 9 drehbar angebracht ist. An der Front der Windkraftanlage 3 auf der linken Seite ist ein Rotor 7 drehbar fixiert, dessen durch Wind induzierte Rotation in einem Generator 5 in der Kabine 9 in elektrische Energie umgewandelt wird. Der Übersichtlichkeit halber sind die Antriebswelle und zahlreiche weitere Komponenten der Kraftübertragung der Rotationskraft in den Generator 5 nicht mit dargestellt.

Zur Umwandlung der elektrischen Energie aus dem Generator 5 für eine Übertragung ins Stromnetz in geeigneter Form (insbesondere mit einer gewünschten Spannung und Frequenz) dient ein Umwandler 1, also ein elektronisches Bauteil 1, das über eine Stromleitung 13 mit dem Stromnetz (nicht dargestellt) verbunden ist. Auf dem Umwandler 1 ist ein Temperatursensor 15 angebracht, der mit einem Ermittlungssystem 17 verbunden ist. Vom Ermittlungssystem 17 werden Signale an einen Signalüberträger 19 weitergegeben, der diese Signale über eine kabellose Verbindung weiter an ein Empfangsgerät 20 in einem Kontrollzentrum (nicht dargestellt) übermittelt. Dort werden mit den Signalen übertragene Informationen an einem Bildschirm 22 eines Rechners grafisch in Form einer Skala 24 dargestellt.

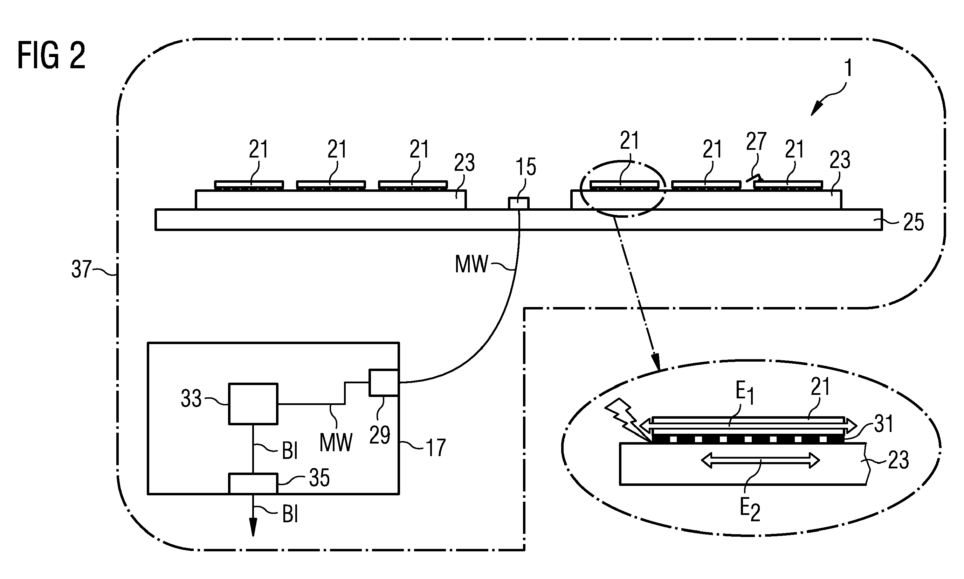

Figur 2 zeigt eine komplette Bauteilanordnung 37 gemäß einer Ausführungsform der Erfindung. Diese Bauteilanordnung 37 umfasst das Bauteil 1, das heißt den Umwandler 1 und das Ermittlungssystem 17. Der Umwandler 1 umfasst eine Trägerplatine 25, auf der auf zwei Isolierschichten 23 jeweils Einzelbausteine 21 in Form von IGBT-Halbleiterelementen angeordnet sind. In der Detailzeichnung rechts unten ist ein einzelner solcher Einzelbaustein 21 auf einer Isolierschicht 23 dargestellt. Er ist mittels einer Verbindungsschicht 31, hier einem Klebstoff, mit der Isolierschicht 23 verbunden. Wird das Bauteil 1 einer starken Erwärmung ausgesetzt, so expandiert der Einzelbaustein 21 stärker als die Isolierschicht 23. Hierdurch entstehen Spannungen im Speziellen in der Verbindungsschicht 31, so dass gerade diese Verbindungsschicht 31 mit der Zeit ermüdet. Ebenso können auch Leiterelemente 27, die Signale bzw. elektrische Ladungen von den Einzelbausteinen 21 weg beziehungsweise zu den Einzelbausteinen 21 hin leiten, auf eine ähnliche Art und Weise thermisch beansprucht werden. Auf dem Bauteil 1 ist zur Ermittlung einer Temperaturkurve der Temperatursensor 15 zentral an einem Symmetriepunkt der Platine 25 angeordnet. Von diesem Temperatursensor 15 führt eine Verbindung zur Übertragung von Temperaturmesswerten MW zur Ermittlungseinheit 17. Die Ermittlungseinheit 17 weist eine Eingangschnittstelle 29 und eine Ausgangsschnittstelle 35 sowie ein Auswertungsmodul 33 auf, in das die Messwerte MW von der Eingangschnittstelle 29 eingespeist werden. Im Auswertungsmodul 33 wird gemäß einer vorgegebenen Regel, beispielsweise eines Algorithmus auf Basis der Wöhler'schen Kurve ein Beanspruchungsindikatorwert BI abgeleitet. Über die Ausgangschnittstelle 35 wird dieser Beanspruchungsindikatorwert BI weitergeleitet an den Signalüberträger 19 (vergleiche Figur 1). Wie in Figur 1 dargestellt kann dieser Beanspruchungsindikatorwert BI an einen Benutzer grafisch ausgegeben werden.

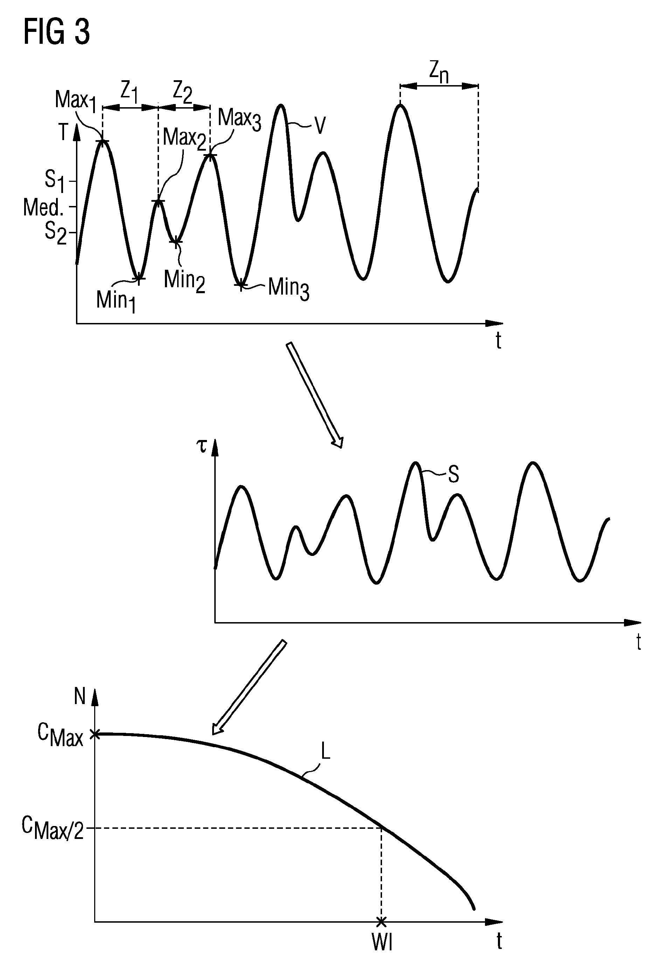

Die Logik hinter diesem auf Temperaturmessung am Bauteil 1 basierenden Ermittlungsverfahrens ergibt sich aus den Kurven, die in Figur 3 dargestellt sind. Die erste Kurve V ist eine Temperaturverlaufskurve V, die die am Temperatursensor 15 gemessene Temperatur über die Zeit aufgetragen darstellt. Um einen statistischen Mittelwert Med, der die Durschnittstemperatur in der Kabine 9 der Windkraftanlage 3 repräsentiert, oszilliert die Temperaturkurve in ungleichmäßigen Bewegungen. Dabei beschreibt sie Maxima Max₁, Max₂, Max₃ und Minima Min₁, Min₂, Min₃. Hieraus ergeben sich Zyklen Z₁, Z₂, ... Zₙ. Im Verlaufe dieser Zyklen Z₁, Z₂, ... Zₙ überschreitet die Kurve V teilweise einen Überschreitungsschwellenwert S1 und unterschreitet teilweise einen Unterschreitungsschwellenwert S2.

Die zweite Kurve S ist eine Scherbelastungsverlaufskurve S der Scherkraft zwischen zwei Lagen des Bauteils 1, die aufgrund der unterschiedlichen Ausdehnungskoeffizienten dieser zwei Lagen entsteht. Die Scherbelastung τ ist hier ebenfalls über die Zeit aufgetragen. Es lässt sich erkennen, dass die Scherbelastungsverlaufskurve S analog zum Verlauf der Temperaturkurve V ausgebildet ist. Daraus ergibt sich letztendlich eine Ableitung von verbleibenden Lebenszyklen N über die Zeit, wie sie in der Lebenszyklus-Verlaufskurve L unten dargestellt sind. Als Lebenszyklen N werden dabei im vorliegenden Fall des Umrichters 1 Schaltzyklen N verstanden. Es wird also parallel ermittelt, wie oft das Bauteil 1 schaltet, um seine Rest-Lebenszeit quantifizieren zu können. Die Lebenszyklus-Verlaufskurve L zeigt die zu erwartende restliche Lebensdauer des Bauteils 1 aufgrund der Beanspruchung durch die Scherbelastungen bzw. die Belastung durch die Temperaturschwankungen, wie sie aus der Scherbelastungsverlaufskurve S und der Temperaturverlaufskurven V hervorgehen. Die Lebenszyklus-Verlaufskurve L wird mithilfe eines geeigneten Logarithmus zur Ermittlung von Materialermüdung abgeleitet. Bei ihrer Ermittlung können sowohl die gesamte TemperaturVerlaufskurve V als auch der Mittelwert Med oder ähnliche Durchschnittswerte verwendet werden, die aus der Kurve V hervorgehen. Ebenso können die Maxima Max₁, Max₂, Max₃ und die Minima Min₁, Min₂, Min₃ und die Zyklen Z₁, Z₂, ... Zₙ zur Bewertung herangezogen werden und/oder Über- bzw. Unterschreitungen der Schwellenwerte S1, S2. Mit anderen Worten kann die Kurve an sich interpretiert werden und auch zusätzlich oder alternativ Ableitungen oder Mittelwerte im Sinne einer Trendanalyse verwendet werden.

Die so gebildete Lebenszyklus-Verlaufskurve L beschreibt in dem vorliegenden Beispiel in etwa die Form einer umgedrehten Parabel. Zu Beginn des Einsatzes des Bauteils verfügt sie über die maximale Anzahl C_{Max} an Lebenszyklen N.

Ist die Hälfte C_{Max}/2 der maximalen Anzahl C_{Max} der Lebenszyklen N des Bauteil 1 erreicht, so ist im vorliegenden Fall der Wartungsindikatorwert WI erreicht, was bedeutet, dass das Bauteil 1 sicherheitshalber gewartet werden sollte. Dies bedeutet nicht, dass das Bauteil 1 automatisch Ausschuss ist, sondern es kann stattdessen auch festgestellt werden, dass das Bauteil 1 den Beanspruchungen besser standgehalten hat als erwartet oder dass es nur in Teilbereichen reparaturbedürftig ist.

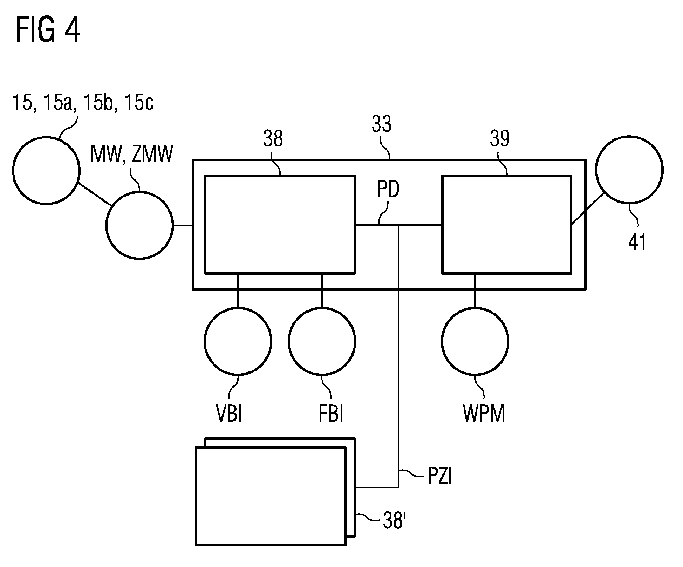

Figur 4 zeigt eine schematische Blockdarstellung einer Systemarchitektur, wie sie in der Bauteilanordnung 37 aus Figur 2 realisiert ist. Sensoren 15, 15a, 15b, 15c (hier als eine Einheit dargestellt) ermitteln verschiedene Messwerte MW, ZMW: Der Temperatursensor 15 ermittelt Temperaturmesswerte MW, während weitere Sensoren 15a, 15b, 15c Zusatzmesswerte ZMW ermitteln, zu Lastverteilungen in der Windkraftanlage 3 und zu mechanischen Spannungen. Diese Messwerte MW, ZMW flie-βen in eine Windkraftanlagen-Kontrolleinheit 38 innerhalb des Auswertungsmoduls 33 ein. Im Auswertungsmodul 33 ist außerdem eine Lebenszeit-Monitoring-Einheit 39 angeordnet.

Die Windkraftanlagen-Kontrolleinheit 38 bezieht weiterhin variable Prozessinformationen VBI aus dem Betrieb der Windkraftanlage 3, etwa die Drehzahl des Rotors 7 oder den Leistungs-Output der Windkraftanlage 3. Diese Werte werden zwar nicht eigens durch Sensoren gemessen, sind aber ableitbar aus anderen Messwerten. Hinzu kommen feste Betriebsinformationen FBI, die sich auf fest vorgenommene Einstellungen der Windkraftanlage 3 beziehen, etwa auf Regelungsparameter des betreffenden elektronischen Bauteils 1, die vorab festgelegt sind und dann im Betrieb höchstens in Intervallen nachjustiert werden. Diese Informationen fließen zur Bewertung in die Windkraftanlagen-Kontrolleinheit 38 ein und werden dort miteinander abgeglichen, so dass daraus Prozessdaten PD resultieren. Zusätzlich können in einem Windpark mit mehreren Windkraftanlagen Prozesszusatzinformationen PZI aus den Windkraftanlagen-Kontrolleinheiten 38' der anderen Windkraftanlagen analog den Prozessdaten PD bezogen werden. Diese Prozesszusatzinformationen können beispielsweise dem Abgleich der Prozessdaten PD, etwa ihrer Verifizierung und Kontrolle dienen. Sie werden daher gemeinsam mit den Prozessdaten PD in die Lebenszeit-Monitoring-Einheit 39 eingespeist. Die Lebenszeit-Monitoring-Einheit 39 bezieht weiterhin Windpark-Modell-Informationen WPM. Dies sind beispielsweise Informationen zur Größe und geometrischen Anordnung des Windparks und zur Position der betreffenden Windkraftanlage 3 innerhalb des Windparks, aber auch Informationen zur Haupt-Windrichtung uvm. Zudem können Informationen aus externen Sensoren 41 bezogen werden, beispielsweise von Windmasten, externen Temperatursensoren und Blitzdetektoren. Unter Berücksichtigung bevorzugt all dieser Informationen leitet die Lebenszeit-Monitoring-Einheit 39 den Beanspruchungsindikatorwert BI des Bauteils 1 ab. Entscheidend ist jedoch, dass auf jeden Fall der Temperatursensor 15 eingesetzt wird und die TemperaturMesswerte MW mit in die Ermittlung des Beanspruchungsindikatorwerts BI einfließen. Dadurch erst liefert das Verfahren besonders aussagekräftige Werte, wie zuvor beschrieben.

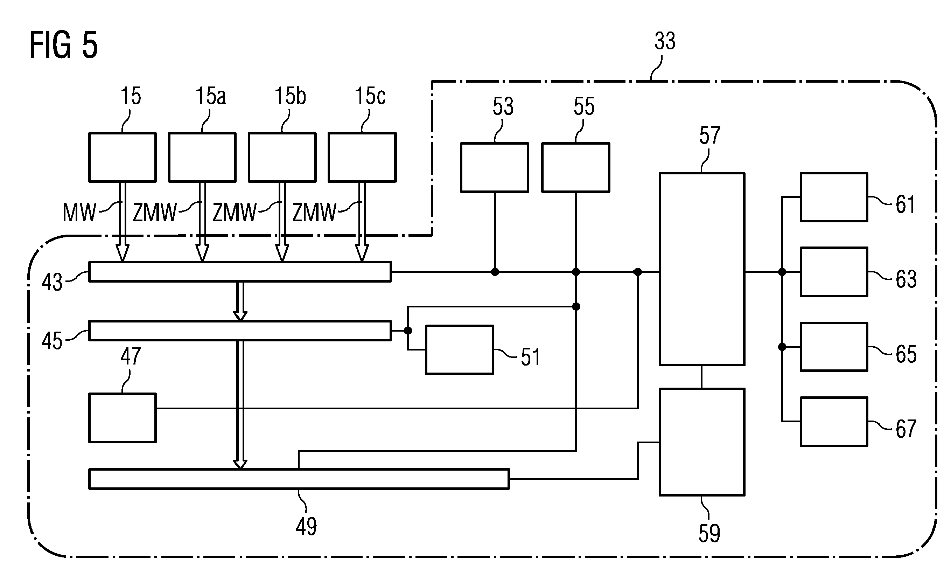

Figur 5 zeigt eine schematische Blockdarstellung eines Signalprozesses im Rahmen einer Ausführungsform des erfindungsgemäßen Verfahrens.

Die Sensoren 15, 15a, 15b, 15c aus Figur 4 speisen ihre Messwerte MW, ZMW in das Auswertungsmodul 33 ein. Dieses ist im vorliegenden Falle als eine Ansammlung von Softwarebausteinen auf einem Prozessor realisiert. Diese Software-Bausteine sind:

Ein erster Zeitpuffer 43 und ein zweiter Zeitpuffer 45, eine Vorhersage-Einheit 47 und eine Rückprojektionseinheit 51, ein 10-Minuten-Timer 53, eine Gefahrenerkennungseinheit 55, eine Gefahrenanzeichen-Sammlungseinheit 49 und eine Gefahrenanzeichen-Auswertungseinheit 59 sowie eine Klassifizierungseinheit 57 und vier Schadensmeldungseinheiten 61, 63, 65, 67.

Die Messwerte MW, ZMW aus den Sensoren 15, 15a, 15b, 15c werden im ersten Zeitpuffer 43 gesammelt und dann in einer vereinheitlichten Taktung weitergegeben. Dadurch können Unterschiede in der Taktung der einzelnen Sensoren 15, 15a, 15b, 15c ausgeglichen werden. Im zweiten Zeitpuffer werden die gesammelten Messwerte der vorherigen Taktung gesammelt und in der Rückprojektionseinheit 51 zur Projektion eines Messzustands zum Zeitpunkt der Ausgabe der vorherigen Taktung ausgewertet. Die Vorhersageeinheit 47 erstellt aufgrund der im ersten Zeitpuffer 43 und im zweiten Zeitpuffer 45 vorliegenden Messwerte MW, ZMW eine Vorhersage, welche Messwerte bei der nächsten Taktung in etwa zu erwarten sind.

Der 10-Minuten-Timer 53 sammelt alle Messwerte MW, ZMW über einen Zeitraum von 10 Minuten und gibt sie dann gesammelt weiter an den Signalüberträger 19 zur weiteren Übertragung an das Kontrollzentrum (vgl. Fig. 1). Die Gefahrenerkennungseinheit 55 erkennt akute Gefahren, beispielsweise eine Erhitzung des Bauteils 1 oder einen technischen Defekt, der beispielsweise zur Abschaltung des Betriebs der gesamten Windkraftanlage 3 führt, um Folgeschäden zu vermeiden. Hingegen dient die Gefahrenanzeichen-Sammlungseinheit 49 in Kombination mit der Gefahrenanzeichen-Auswertungseinheit 59 dazu, "weichere" Gefahrenanzeichen zu sammeln und ihre Häufigkeit und ggf. andere Symptome auszuwerten. So bedeutet das einmalige Überschreiten von bestimmten Temperaturwerten keine akute Gefahr, doch das häufige Auftreten solcher Werte kann Hinweise darauf geben, dass das Bauteil 1 oder andere Einheiten in der Windkraftanlage 3 einen Defekt hat bzw. haben. In der Klassifizierungseinheit 57 werden die Messwerte MW, ZMW sowie Informationen aus der Gefahrenerkennungseinheit 55 und der Gefahrenanzeichen-Auswertungseinheit 59 gesammelt und unter Verwendung des bereits oben beschriebenen Auswertungsalgorithmus die Rest-Lebensdauer des Bauteils 1 ermittelt. Die vier Schadensmeldungseinheiten 61, 63, 65, 67 dienen zur Meldung bestimmter Schadensarten, also beispielsweise einer Überhitzung, eines Betriebsfehlers, einer zu starken Erschütterung oder dem Erreichen einer kritischen Rest-Lebenszeit des Bauteils 1. All die generierten Informationen können über den 10-Minuten-Timer 53 an das Kontrollzentrum weitergegeben werden.

Es wird abschließend noch einmal darauf hingewiesen, dass es sich bei den vorhergehend detailliert beschriebenen Verfahren sowie bei den dargestellten Systemen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

## Patentansprüche

1. Verfahren zur Ermittlung eines aktuellen Beanspruchungsindikatorwerts (BI) eines elektrischen und/oder elektronischen Bauteils (1), insbesondere eines Umrichters, in einer Windkraftanlage (3), wobei der Beanspruchungsindikatorwert (BI) auf Basis von Temperaturmessungen in einem Umgebungsbereich des elektrischen und/oder elektronischen Bauteils (1) ermittelt wird.

2. Verfahren gemäß Anspruch 1, wobei die Temperaturmessungen über den gesamten Einsatzzyklus des Bauteils (1) in der Windkraftanlage (3) durchgeführt werden und aus den Temperaturmessungen Referenzwerte abgeleitet und akkumuliert werden und der Beanspruchungsindikatorwert (BI) auf Basis der akkumulierten Referenzwerte gebildet wird.

3. Verfahren gemäß Anspruch 2, wobei die Referenzwerte auf Temperaturzyklen (Z₁, Z₂, Z₃,..., Zₙ) einer aus den Temperaturmessungen ermittelten Temperaturverlaufskurve (V) basieren.

4. Verfahren gemäß Anspruch 2 oder 3, wobei die Referenzwerte auf Maxima (Max₁, Max₂, Max₃) und/oder Minima (Min₁, Min₂, Min₃) einer aus den Temperaturmessungen ermittelten Temperaturverlaufskurve (V) basieren.

5. Verfahren gemäß einem der Ansprüche 2 bis 4, wobei die Referenzwerte auf Basis von Über- und/oder Unterschreitungen von vorab festgelegten Temperatur-Schwellenwerten (S₁, S₂) festgelegt werden.

6. Verfahren gemäß Anspruch 5, wobei die Beträge der Über-und/oder Unterschreitungen im Rahmen der Akkumulation addiert werden.

7. Verfahren gemäß einem der vorhergehenden Ansprüche, wobei der aktuelle Beanspruchungsindikatorwert (BI) grafisch, bevorzugt mit Hilfe einer Skala (24) und/oder einer grafischen Kodierung, an einen Benutzer ausgegeben wird.

8. Verfahren gemäß einem der vorhergehenden Ansprüche, wobei der aktuelle Beanspruchungsindikatorwert (BI) mit einem Wartungsindikatorwert in Bezug gesetzt wird, welcher Wartungsindikatorwert einen Zustand des Bauteils (1) repräsentiert, an dem das Bauteil (1) aufgrund von vorab festgelegten Vorgaben gewartet werden soll.

9. Verfahren gemäß Anspruch 8, wobei der Bezug zwischen dem aktuellen Beanspruchungsindikatorwert (BI) und dem Wartungsindikatorwert grafisch, bevorzugt mit Hilfe einer Skala (24) und/oder einer grafischen Kodierung, an einen Benutzer ausgegeben wird.

10. Verfahren gemäß einem der vorhergehenden Ansprüche, wobei die Temperaturmessungen durch mindestens einen Temperatursensor (15) durchgeführt werden, der an einer relativ zum Bauteil (1) festen Stelle im Umgebungsbereich des Bauteils (1) angebracht ist.

11. Verfahren gemäß Anspruch 10, wobei ein einzelner Temperatursensor (15) verwendet wird, der relativ zum Bauteil (1), bevorzugt verbunden mit dem Bauteil (1), an einem Zentralort angebracht ist.

12. Verfahren gemäß Anspruch 10, wobei mehrere Temperatursensoren (15) verwendet werden, die an repräsentativen Messorten im Umgebungsbereich des Bauteils (1) angeordnet sind, bevorzugt an Messorten, an denen gemäß vorab erhobenen Erfahrungswerten besonders hohe lokale Temperaturschwankungen auftreten.

13. Ermittlungseinheit (17) zur Ermittlung eines aktuellen Beanspruchungsindikatorwerts (BI) eines elektrischen und/oder elektronischen Bauteils (1), insbesondere eines Umrichters, in einer Windkraftanlage (3), mit einer Eingangsschnittstelle (29) zur Entgegennahme von Temperaturmesswerten (MW) und einem Auswertungsmodul (33), das so ausgebildet ist, dass es im Betrieb einen aktuellen Beanspruchungsindikatorwert (BI) des Bauteils (1) auf Basis der Temperaturmesswerte (MW) ermittelt.

14. Bauteilanordnung (37) eines elektrischen und/oder elektronischen Bauteils (1), insbesondere eines Umrichters, in einer Windkraftanlage (3), umfassend das Bauteil (1) und einen Temperatursensor (15) zur Durchführung von Temperaturmessungen im Bereich des Bauteils (1) sowie eine Ermittlungseinheit (17) gemäß Anspruch 13.

15. Computerprogrammprodukt, das direkt in einen Prozessor eines programmierbaren Ermittlungssystems ladbar ist, mit Programmcode-Mitteln, um alle Schritte eines Verfahrens gemäß einem der Ansprüche 1 bis 12 auszuführen, wenn das Programmprodukt auf dem Ermittlungssystem ausgeführt wird.
